# EUROPEAN PATENT SPECIFICATION

(11) **EP 4 287 113 B1**
(45) Date of publication and mention of the grant of the patent: **08.04.2026**
(21) Application number: 21927115.2
(22) Date of filing: 23.02.2021
(51) Int. Cl.: G06T 11/00, G06T 11/40

(54) **METHOD AND APPARATUS FOR PROCESSING MULTI-LAYER IMAGE, AND TERMINAL DEVICE**
VERFAHREN UND VORRICHTUNG ZUR VERARBEITUNG EINES MEHRSCHICHTIGEN BILDES UND ENDGERÄTEVORRICHTUNG
PROCÉDÉ ET APPAREIL DE TRAITEMENT D'IMAGE MULTICOUCHE ET DISPOSITIF TERMINAL

(43) Date of publication of application: 06.12.2023
(73) Proprietor: Huawei Technologies Co., Ltd., Shenzhen, Guangdong 518129 (CN)
(72) Inventor: SONG, Danna, Shenzhen, Guangdong 518129 (CN); MENG, Biao, Shenzhen, Guangdong 518129 (CN); WANG, Boqing, Shenzhen, Guangdong 518129 (CN)
(74) Representative: Pfenning, Meinig & Partner mbB
(86) International application number: PCT/CN2021/077474
(87) International publication number: WO 2022/178668

(56) References cited:
- WO-A1-00/68887
- CN-A- 106 127 721
- CN-A- 106 201 512
- JP-A- 2003 087 572
- US-A1- 2016 328 871

## Description

### TECHNICAL FIELD

This application relates to the field of image processing technologies, and in particular, to a method and an apparatus for processing a multi-layer image, a computer-readable storage medium and a computer program product.

### BACKGROUND

With development of terminal technologies, a display screen of a mobile phone is increasingly large, applications (application, APP) installed on the mobile phone are increasingly rich, and use functions are increasingly diversified. For example, a plurality of APP windows may be displayed on split screens that are on the display screen. In a multi-window display scenario, a plurality of APP windows are actually formed by superimposing a plurality of layers. In addition, for a single APP, display content of the APP may also be formed by superimposing a plurality of layers.

However, the more the layers, the higher the read bandwidth of a video RAM, and the higher the power consumption. When a refresh rate of a display is high (for example, 120 Hz), a large quantity of layers cause a voltage boost and frequency increase of the display, resulting in an increase in the read bandwidth of the video RAM and a rise in the power consumption, thereby affecting user experience.

US 2016/328871 A1 discloses a graphics system and an associated method for retrieving data in the graphics system to display a blended image composed of a plurality of overlay image layers are provided. The method includes the steps of: dividing each of the overlay image layers into a plurality of regions; obtaining respective transparency information of each region of the overlay image layers; and generating the blended image according to the respective transparency information of each region of the overlay image layers.

JP 2003 087572 A discloses an image compressing method capable of performing reversible compression about a transparent color while performing reversible compression of the entire image information with a value representing transparence allocated as a pixel value.

### SUMMARY

The invention is set out in the appended set of claims. This application provides a method and an apparatus for processing a multi-layer image, to resolve a problem that read bandwidth and power consumption of a video RAM are large in the conventional technology when a to-be-displayed image includes a large quantity of layers.

To achieve the foregoing objective, this application uses the following technical solutions.

According to a first aspect, this application provides a method for processing a multi-layer image. The method includes: determining a target area of each of M first layers based on pixel transparency information and a hierarchical relationship of the M first layers. The target area includes a transparent area and/or a covered area. The method also includes: reading pixels at the M first layers other than the target area, to obtain M second layers. Then, an image obtained by superimposing the M second layers is displayed. A total quantity of pixels at the M second layers is less than a total quantity of pixels at the M first layers.

The covered area is an area covered by an opaque area of an upper layer. Pixel transparency information corresponding to a pixel in the opaque area indicates that the pixel is opaque. Pixel transparency information corresponding to a pixel in the transparent area indicates that the pixel is transparent. M is an integer greater than 1.

Based on the foregoing solution, before a layer is read, a transparent area and/or a coverage area at the layer can be first determined by analyzing a transparency and/or coverage situation of the layer based on pixel transparency components at a plurality of layers and a hierarchical relationship of the layers. Because the transparent area and/or the covered area do/does not contribute to a display effect when being displayed, content of these areas may not be read. Therefore, when the layer is read, content that contributes to the display effect of the read layer is selected to be read, and the transparent areas and/or the covered areas are not read. In this way, read bandwidth can be reduced, and power consumption can be reduced.

In some possible embodiments, when the M first layers include a top first layer, an intermediate first layer, and a bottom first layer, the determining a target area of each of M first layers based on pixel transparency information and a hierarchical relationship of the M first layers includes:
determining a transparent area at the top first layer as a first target area of the top first layer;
determining a transparent area at the intermediate first layer and/or an area covered by an opaque area at the top first layer as a second target area of the intermediate first layer; and
determining a transparent area at the bottom first layer, the area covered by the opaque area at the top first layer, and/or an area covered by an opaque area at the intermediate first layer as a third target area of the bottom first layer.

In some possible embodiments, the reading pixels at the M first layers other than the target area to obtain M second layers includes:
reading pixels at the top first layer other than the first target area, to obtain a top second layer;
reading pixels at the intermediate first layer other than the second target area, to obtain an intermediate second layer; and
reading pixels at the bottom first layer other than the third target area, to obtain a bottom second layer.

The M second layers include the top second layer, the intermediate second layer, and the bottom second layer.

Optionally, before a layer is read, it may be determined whether a transparent area and/or a covered area exist/exists at the layer. In an actual implementation, the following cases may exist: (1) Neither a transparent area nor a covered area exists at the layer; or (2) a transparent area but no covered area exists at the layer; or (3) a covered area but no transparent area exists at the layer; or (4) both a transparent area and a covered area exist at the layer. It may be understood that a transparent area but no covered area may exist at a top layer of the plurality of layers; and a transparent area and a covered area may exist at an intermediate layer or a bottom layer of the plurality of layers.

On the one hand, because pixels in the transparent area are transparent, when a multi-layer image is displayed, the pixels in the transparent area are invisible due to transparency. In other words, the pixels in the transparent area do not contribute to a display effect when being displayed. Therefore, embodiments of this application propose that before a layer is read, whether a transparent area exists at the layer may be analyzed first, and pixels in the transparent area may not be read.

On the other hand, because the covered area is covered by the opaque area of the upper layer, that is, a pixel in the covered area is covered by the opaque area of the upper layer. Therefore, when a multi-layer image is displayed, the pixel in the covered area is invisible due to being covered. In other words, the pixel in the covered area does not contribute to a display effect when being displayed. Therefore, embodiments of this application propose that before a layer is read, it may be first analyzed whether a covered area exists at the layer, and pixels of the covered area may not be read.

In some possible embodiments, after the determining a target area of each of M first layers, and before the reading pixels at the M first layers other than the target area, the method further includes: marking a mask in the target area of each of the M first layers. Pixels in an area indicated by the mask are not allowed to be read.

In this case, the reading pixels at the M first layers other than the target area includes: reading pixels in image areas that are not marked with the mask at the M first layers; and skipping reading pixels in image areas that are marked with the mask at the M first layers.

In some embodiments, whether a pixel is transparent may be determined based on an A component in pixel data of a layer, and mask marking is performed on a transparent pixel at the layer or an area in which the transparent pixel is located. An area marked with a mask may be referred to as a masked area. Alternatively, mask marking may be performed on a covered pixel at the layer or an area in which the covered pixel is located. For ease of description, an area marked with a mask may be referred to as a masked area.

On the one hand, if the A component indicates that the pixel is transparent, the pixel is marked with a mask, so that the pixel is not read. On the other hand, if the A component indicates that the pixel is opaque, the pixel covers a pixel located below, and the pixel located below is masked with a mark, so that the pixel located below is not read.

Optionally, the mask may be a string of binary code that perform an AND operation on a field corresponding to a pixel, to shield a current field corresponding to the pixel. In a scenario of reading a layer, the field corresponding to the shielded pixel is not read. That is, the masked area may also be understood as a shielded area, and pixels in the shielded area are not read.

In this way, a transparent area and/or a covered area at a layer may be determined by analyzing pixel transparency components at a plurality of layers and a hierarchical relationship of the layers, and mask marking is performed on the transparent area and/or the covered area, to obtain a masked area. Further, the terminal device may read pixels in image areas that are not marked with the mask at the M first layers. In this case, the terminal device may not read pixels in image areas that are marked with the mask at the M first layers. Because a part of pixels that contribute to the display effect are selected to be read when the layer is read, a total quantity of pixels at the M second layers obtained through reading is less than a total quantity of pixels at the M first layers.

In this way, in embodiments of this application, a coverage and/or transparency situation of a layer are/is analyzed before the layer is read, and data that may not be read is determined based on the coverage and/or transparency situation of the layer, so that these masked areas may not be read when the layer is read, to reduce read bandwidth and power consumption.

Before the determining a target area of each of M first layers, the method further includes: drawing the M first layers by using a graphics processing unit GPU. The M first layers have the hierarchical relationship.

When a program is running, the GPU performs corresponding processing on a program running process and a result based on instructions and related data provided by the CPU, and converts the program running process and the result into a text and image display signal that can be accepted by a display. Specifically, M first layers are first drawn by using the GPU, then data of the plurality of layers is written into a memory, and then the data of the plurality of layers is read from the memory, and are displayed by the display.

After the drawing the M first layers by using the GPU, the method further includes: obtaining pixel transparency information of the M first layers based on pixel data of the M first layer; and writing the M first layers and the pixel transparency information into the memory.

In this case, the reading pixels at the M first layers other than the target area includes: reading pixels at the M first layers other than the target area from the memory.

In this application, hardware is used to predetermine a transparency and coverage attribute of a layer before the layer is superimposed, and determine a transparent area and/or a covered area at the layer based on the transparency and coverage attribute of the layer. When the layer is read, the transparent area and/or the covered area may not be read, thereby reducing read bandwidth of the layer and reducing display power consumption.

The obtaining pixel transparency information of the M first layers includes: dividing each of the M first layers into N image blocks. N is an integer greater than 1. The obtaining pixel transparency information of the M first layers also includes: traversing all pixel data in each image block to obtain pixel transparency information corresponding to each image block.

In this case, the writing the M first layers and the pixel transparency information into the memory includes: compressing each image block of the M first layers and corresponding pixel transparency information, and writing a compressed image block and compressed information into the memory.

Optionally, after the GPU draws a layer, the layer is compressed, and during compression, statistics on the A component of each pixel in each block may be collected by using a flag.

Based on this solution, in a process in which the GPU finishes drawing the layer and writes the layer into the memory, to reduce bandwidth, a compression algorithm is used. The compression algorithm traverses all pixel data in each block of the layer. By using this function, a function of collecting statistics on transparency components may be added in a compression process, and a measurement result is stored in the memory in a form of header data (that is, the foregoing header field). In a process of reading a layer from the memory, content of a transparent area of each layer and/or content covered by another layer are not read, thereby saving bandwidth.

A field corresponding to each image block of the M first layers includes a header field and a data field. The header field corresponding to each image block includes transparency information of all pixels or a part of pixels in each image block. The part of pixels are located in the transparent area and/or the opaque area. The data field corresponding to each image block includes pixel values of all pixels in each image block.

In this case, the compressing each image block of the M first layers and corresponding pixel transparency information and writing the compressed image block and information into the memory includes: writing a header field and a data field that correspond to each image block of the M first layers into the memory.

In this case, the determining a target area of each of M first layers based on pixel transparency information and a hierarchical relationship of the M first layers includes: determining the target area of each of the M first layers based on a header field and a data field that correspond to each of N image blocks in each first layer.

In some possible embodiments, the M first layers are images using an RGBA or ARGB data format. R, G, and B separately represent a color component of a pixel, and A represents a transparency component of a pixel.

In some possible embodiments, the displaying an image obtained by superimposing the M second layers includes: determining a hierarchical relationship of the M second layers based on the hierarchical relationship of the M first layers; superimposing the M second layers based on the hierarchical relationship of the M second layers to obtain a target image; and displaying the target image on a display screen.

According to a second aspect, this application provides an apparatus for processing a multi-layer image. The apparatus includes a unit configured to perform the method according to the first aspect. The apparatus may correspondingly perform the method described in the first aspect. For related descriptions of the unit in the apparatus, refer to the descriptions of the first aspect. For brevity, details are not described herein again.

The method according to the first aspect may be implemented by hardware, or may be implemented by hardware executing corresponding software. The hardware or software includes one or more modules or units corresponding to the foregoing function, for example, a processing module or unit, a reading module or unit, or a display module or unit.

According to a third aspect, this application provides a computer-readable storage medium. A computer program (which may also be referred to as instructions or code) used to implement the method according to the first aspect is stored on the computer-readable storage medium.

For example, when the computer program is executed by a computer, the computer is enabled to perform the method according to the first aspect.

According to a fourth aspect, this application provides a computer program product. The computer program product includes a computer program (which may also be referred to as instructions or code), and when the computer program is executed by a computer, the computer is enabled to implement the method according to the first aspect.

It may be understood that, for beneficial effects of the second aspect to the fourth aspect, refer to related descriptions in the first aspect. Details are not described herein again.

### BRIEF DESCRIPTION OF DRAWINGS

FIG. 1 is a schematic architectural diagram of an operating system to which a method for processing a multi-layer image is applied according to an embodiment of this application;
FIG. 2 is a schematic flowchart 1 of a method for processing a multi-layer image according to an embodiment of this application;
FIG. 3 is a schematic diagram of determining a transparent area of a layer in a method for processing a multi-layer image according to an embodiment of this application;
FIG. 4 is a schematic diagram 1 of determining a covered area of a layer in a method for processing a multi-layer image according to an embodiment of this application;
FIG. 5 is a schematic diagram 2 of determining a covered area of a layer in a method for processing a multi-layer image according to an embodiment of this application;
FIG. 6 is a schematic diagram of a method for processing a multi-layer image applied to a multi-layer image including a fully transparent layer according to an embodiment of this application;
FIG. 7 is a schematic diagram of a method for processing a multi-layer image applied to a multi-layer image including an opaque layer according to an embodiment of this application;
FIG. 8 is a schematic block diagram of an image display principle to which a method for processing a multi-layer image is applicable according to an embodiment of this application;
FIG. 9 is a schematic flowchart 2 of a method for processing a multi-layer image according to an embodiment of this application;
FIG. 10 is a schematic block diagram of a method for processing a multi-layer image in processing a plurality of consecutive frames of images according to an embodiment of this application;
FIG. 11 is a schematic structural diagram of an apparatus for processing a multi-layer image according to an embodiment of this application; and
FIG. 12 is a schematic structural diagram of a terminal device according to an embodiment of this application.

### DESCRIPTION OF EMBODIMENTS

To make the objectives, technical solutions, and advantages of embodiments of the present invention clearer, the following clearly and completely describes the technical solutions in embodiments of the present invention with reference to the accompanying drawings in embodiments of the present invention. It is clear that the described embodiments are some but not all of embodiments of the present invention. All other embodiments obtained by a person of ordinary skill in the art based on embodiments of the present invention without creative efforts shall fall within the protection scope of the present invention.

The term "and/or" in this specification describes an association relationship of associated objects and represents that three relationships may exist. For example, A and/or B may represent the following three cases: Only A exists, both A and B exist, and only B exists. The character "/" in this specification indicates an "or" relationship of the associated objects. For example, A/B indicates A or B.

In the specification and claims of this specification, the terms "first", "second", and the like are intended to distinguish between different objects, but do not indicate a particular order of the objects. For example, a first layer, a second layer, and the like are used to distinguish between different layers, but are not used to describe a specific order of the layers.

In embodiments of this application, the terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a relative concept in a specific manner.

In the descriptions of embodiments of this application, unless otherwise specified, "a plurality of" means two or more. For example, a plurality of processing units are two or more processing units, and a plurality of elements are two or more elements.

With development of terminal technologies, APPs installed on a mobile phone are increasingly rich, and use functions are increasingly diversified. For example, a plurality of APP windows may be displayed on a display screen in a split-screen mode. In a multi-window display scenario, a plurality of APP windows are actually formed by superimposing a plurality of layers. In addition, for a single APP, display content of the APP may also be formed by superimposing a plurality of layers. However, the more the layers, the higher the read bandwidth of a video RAM, and the higher the power consumption. The bandwidth is used to represent a data transmission capability of signal transmission, an amount of data that passes through a link within a unit time, and a display capability of a display. When a refresh rate of the display is increased, a requirement for the bandwidth of the display is increased. During an actual implementation, when the refresh rate of the display is high (for example, 120 Hz), a large quantity of layers cause a voltage boost and frequency increase of the display, resulting in an increase in the read bandwidth of the video RAM and a rise in the power consumption, thereby affecting user experience.

For example, the display screen of the display usually uses a command mode (command mode) and a video mode (video mode). For a display screen that uses a command mode, a partial refresh method may be used to reduce bandwidth, but costs are high. In order to reduce costs, a display in a video mode with a lower cost may be used. For the display screen in the video mode, if the displayed content is a static picture, a single layer obtained by superimposing a plurality of layers may be sent to the display screen for display (short for sending for display), which may reduce bandwidth and power consumption. However, when the displayed content is a non-static picture (that is, a dynamic picture), for a scenario in which a plurality of layers of the non-static picture are superimposed, the display screen in the video mode still faces pressure on high bandwidth and power consumption. In other words, for the display screen in the video mode, in a multi-layer superposition scenario that occurs when the non-static picture is displayed, if a high refresh frame rate is used, very high data bandwidth occurs, and sometimes a voltage boost of a video RAM is caused, which causes very high power consumption, thereby causing a phenomenon of heating of a terminal device and affecting user experience.

For the foregoing scenario, embodiments of this application provide a method and an apparatus for processing a multi-layer image, and a terminal device, to determine a target area of each of M first layers based on pixel transparency information and a hierarchical relationship of the M first layers, where the target area includes a transparent area and/or a covered area (that is, an area covered by an opaque area of an upper layer); and then read pixels at the M first layers other than the target area to obtain M second layers. Then, an image obtained by superimposing the M second layers is displayed, where a total quantity of pixels at the M second layers is less than a total quantity of pixels at the M first layers.

Through solutions of this application, before a layer is read, a transparent area and/or a coverage area at the layer can be first determined by analyzing a transparency and/or coverage situation of the layer based on pixel transparency components at a plurality of layers and a hierarchical relationship of the layers. Because the transparent area and/or the covered area do/does not contribute to a display effect when being displayed, content of these areas may not be read. That is, when the layer is read, content that contributes to the display effect of the read layer is selected to be read, and the transparent areas and/or the covered areas are not read. In this way, read bandwidth can be reduced, and power consumption can be reduced.

In embodiments of this application, the terminal device includes a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a primary memory). An operating system of the operating system layer may be any one or more computer operating systems that implement service processing via a process (process), for example, a Linux operating system, a Unix operating system, an Android operating system, an iOS operating system, or a windows operating system, or may be another possible operating system. This is not specifically limited in embodiments of this application. The application layer may include applications such as a video player, a browser, an address book, text processing software, and instant messaging software.

The following uses the Android operating system as an example to describe a software environment to which a media data processing method provided in embodiments of this application is applied.

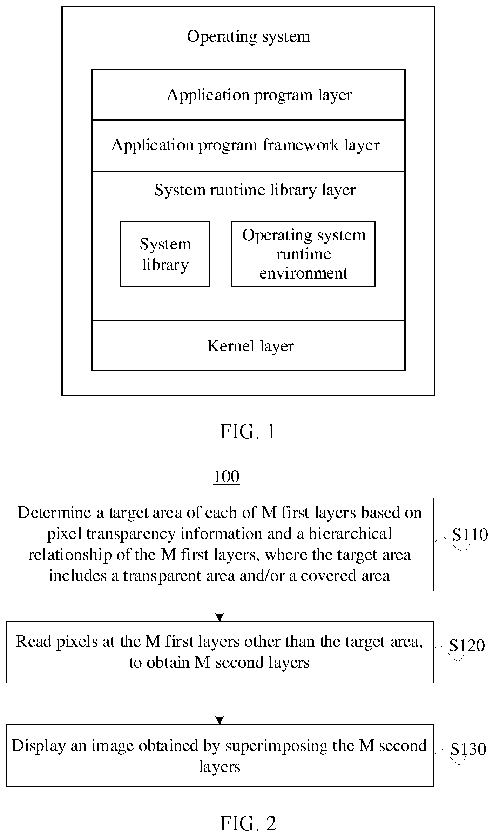

FIG. 1 is a possible schematic diagram of an architecture of an Android operating system according to an embodiment of this application. In FIG. 1, the architecture of the Android operating system includes four layers: an application program layer, an application program framework layer, a system runtime library layer, and a kernel layer (which may be specifically a Linux kernel layer).

The application program layer includes application programs (including a system application program and a third-party application program) in the Android operating system.

The application framework layer is an application framework, and a developer may develop some applications based on the application framework layer when following a development rule of the application framework.

The system runtime library layer includes a library (which is also referred to as a system library) and an Android operating system runtime environment. The library mainly provides various resources required for the Android operating system. The Android operating system runtime environment is used to provide a software environment for the Android operating system.

The kernel layer is an operating system layer of the Android operating system, and is a bottom layer in Android operating system software layers. The kernel layer provides core system services and hardware-related drivers for the Android operating system based on the Linux kernel.

The Android operating system is used as an example. In embodiments of this application, a developer may develop a software program for implementing the media data processing method provided in embodiments of this application based on the system architecture of the Android operating system shown in FIG. 1, so that the media data processing method can be run based on the Android operating system shown in FIG. 1. In other words, a processor or a terminal device may run the software program in the Android operating system, to implement the media data processing method provided in embodiments of this application.

The terminal device in embodiments of this application may be a mobile terminal, or may be a non-mobile terminal. For example, the mobile terminal may be a mobile phone, a tablet, a notebook computer, a palmtop computer, a vehicle terminal, a wearable device, an ultra-mobile personal computer (ultra-mobile personal computer, UMPC), a netbook, a personal digital assistant (personal digital assistant, PDA), or the like. The non-mobile terminal may be a personal computer (personal computer, PC), a television (television, TV), a teller machine, a self-service machine, or the like. This is not specifically limited in embodiments of this application.

An execution subject of the media data processing method provided in embodiments of this application may be the terminal device mentioned above, or a functional module and/or a functional entity in the terminal device that can implement the media data processing method. This may be specifically determined based on an actual use requirement. This is not limited in embodiments of this application. The following uses the terminal device as an example to illustratively describe, with reference to the accompanying drawings, the media data processing method provided in embodiments of this application.

FIG. 2 is a schematic flowchart of a method for processing a multi-layer image according to an embodiment of this application. As shown in FIG. 2, the method 100 includes the following steps S110 to S130.

S110. Determine a target area of each of M first layers based on pixel transparency information and a hierarchical relationship of the M first layers, where the target area includes a transparent area and/or a covered area.

The covered area is an area covered or blocked by an opaque area of an upper layer, transparency information corresponding to pixels in the opaque area indicates that the pixels are opaque, and these opaque pixels are opaque pixels for short. Transparency information corresponding to pixels in the transparent area indicates that the pixels are transparent, and these transparent pixels are transparent pixels for short.

Optionally, the pixel transparency information may be represented by a percentage of transparency. For example, 100% represents complete transparency, and 0% represents complete opacity. It may be understood that a percentage value in a range of (0%, 100%) represents semitransparency. Certainly, the pixel transparency information may alternatively be represented in another form, for example, represented in hexadecimal notation, where 00 represents complete transparency, and FF represents complete opacity. A specific representation form of the pixel transparency information may be determined based on an actual use requirement. This is not limited in embodiments of this application.

In embodiments of this application, pixel data of each of the first layers includes pixel transparency information, and whether a pixel is transparent or opaque may be determined based on the pixel transparency information. In some embodiments, each of the foregoing first layers may be an image in an RGBA data format, or may be an image in an ARGB data format, where R, G, and B separately represent a color component of a pixel, and A represents a transparency component of a pixel. In this case, whether the pixel is transparent or opaque may be determined based on an A component of the pixel data at the layer. In this way, by analyzing the A component, the transparency of the layer may be determined, to determine the transparent area of the layer, and the coverage situation of the layer may be determined with reference to the hierarchical relationship of layers, to determine the covered area of the layer.

For example, if an A component of a pixel at the layer is 00, it may be determined that the pixel is completely transparent; or if an A component of a pixel at the layer is FF, it may be determined that the pixel is completely opaque. Alternatively, if an A component of a pixel at the layer is 0%, it may be determined that the pixel is completely transparent; or if an A component of a pixel at the layer is 100%, it may be determined that the pixel is completely opaque.

Because pixels in the transparent area are transparent, when a multi-layer image is displayed, the pixels in the transparent area are invisible due to transparency. In other words, the pixels in the transparent area do not contribute to a display effect when being displayed. Therefore, embodiments of this application propose that before a layer is read, whether a transparent area exists at the layer may be first analyzed, and pixels in the transparent area may not be read.

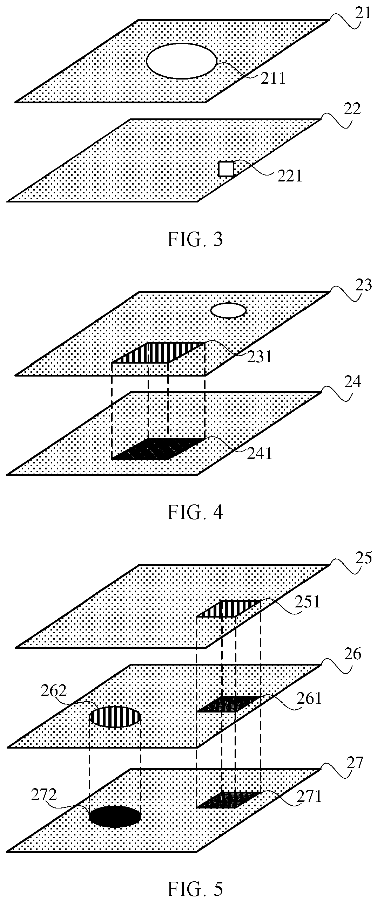

For example, two layers are used as an example. As shown in FIG. 3, a layer 21 is an upper layer, and a layer 22 is a lower layer. The layer 21 includes a transparent area 211, and the layer 22 includes a transparent area 221. Because pixels in the transparent area 211 of the layer 21 are transparent and invisible, the pixels in the transparent area 211 may not be read. Because pixels in the transparent area 221 of the layer 22 are transparent and invisible, the pixels in the transparent area 221 may not be read.

It should be noted that the multi-layer image to be processed in embodiments of this application includes at least two layers (M is an integer greater than 1), and the at least two layers have a hierarchical relationship. When a plurality of layers are displayed, the plurality of layers are displayed in a superimposed manner based on the hierarchical relationship. Because the plurality of layers have a hierarchical relationship, there may be situations where the upper layer covers the lower layer between the layers. From a perspective of a superposition display effect, an opaque area of the upper layer covers a part of an area of the lower layer. Because the part of the area is covered, the part of the area is referred to as a covered area. It should be noted that, because the transparent area of the upper layer has no effect on display of the lower layer, embodiments of this application mainly considers situations where the opaque area of the upper layer covers or blocks the lower layer.

For example, two layers are used as an example. As shown in FIG. 4, a layer 23 is an upper layer and includes an opaque area 231, and a layer 24 is a lower layer. When the two layers are displayed in a superimposed manner, the layer 23 is above the layer 24. The opaque area 231 at the layer 23 covers or blocks an area 241 of the layer 24 (as shown in a black area in FIG. 4). Therefore, pixels in the area 241 of the layer 24 may not be read. A transparent area or a semi-transparent area at the layer 23 has no effect on the display of the layer 24.

For another example, three layers are used as an example. As shown in FIG. 5, a layer 25 is a top layer and includes an opaque area 251, a layer 26 is an intermediate layer and includes an opaque area 262, and a layer 27 is a bottom layer. When the three layers are displayed in a superimposed manner, the layer 25 is at the top, the layer 26 is in the center, and the layer 27 is at the bottom. The opaque area 251 at the layer 25 covers an area 261 (as shown in a black rectangular area in FIG. 5) of the layer 26, and also covers an area 271 (as shown in a black rectangular area in FIG. 5) of the layer 27. In addition, the opaque area 262 at the layer 26 covers the area 272 (as shown in a black ellipse area in FIG. 5) of the layer 27. A transparent area or a semi-transparent area at the layer 25 has no effect on the display of the layer 26 and the layer 27, and a transparent area or a semi-transparent area at the layer 26 has no effect on the display of the layer 27.

Certainly, in embodiments of this application, the M first layers may alternatively be four or more layers, which are respectively a top layer, at least two intermediate layers, and a top layer. For a layer coverage situation, refer to descriptions of coverage situations of the foregoing three layers. This is not limited in embodiments of this application.

It should be noted that, for ease of description, in the foregoing embodiments, an example in which the transparent area is in a circular or rectangular shape and the opaque area is in a circular or rectangular shape is used for description. During an actual implementation, shapes of the transparent area and the opaque area are not limited in embodiments of this application. In addition, in embodiments of this application, locations of the transparent area and the opaque area at the layer are not limited, and sizes of the transparent area and the opaque area are not limited. This may be specifically determined based on an actual use requirement. This is not limited in embodiments of this application.

Because the covered area is covered by the opaque area of the upper layer, that is, a pixel in the covered area is covered by the opaque area of the upper layer. Therefore, when a multi-layer image is displayed, the pixel in the covered area is invisible due to being covered. In other words, the pixel in the covered area does not contribute to a display effect when being displayed. Therefore, embodiments of this application propose that before a layer is read, it may be first analyzed whether a covered area exists at the layer, and pixels of the covered area may not be read.

In some embodiments, before a layer is read, it may be determined whether a transparent area and/or a covered area exist/exists at the layer. In an actual implementation, the following cases may exist: (1) Neither a transparent area nor a covered area exists at the layer; or (2) a transparent area but no covered area exists at the layer; or (3) a covered area but no transparent area exists at the layer; or (4) both a transparent area and a covered area exist at the layer. It may be understood that a transparent area but no covered area may exist at a top layer of the plurality of layers; and a transparent area and a covered area may exist at an intermediate layer or a bottom layer of the plurality of layers.

For example, that the M first layers include a top first layer, an intermediate first layer, and a bottom first layer is used as an example. The foregoing S110 includes the following S111 to S113.

S111. Determine a transparent area at a top first layer as a target area (referred to as a first target area) of the top first layer.

S112. Determine a transparent area at an intermediate first layer and/or an area covered by an opaque area at the top first layer as a target area (referred to as a second target area) at the intermediate first layer.

S113. Determine a transparent area at a bottom first layer, the area covered by the opaque area at the top first layer, and/or an area covered by an opaque area at the intermediate first layer as a target area (referred to as a third target area) of the bottom first layer.

It should be noted that an execution sequence of S111, S112, and S113 is not limited in embodiments of this application. For example, S111, S112, and S113 may be sequentially performed; or S111 and S112 may be simultaneously performed before S113; or S111, S112, and S113 may be simultaneously performed. This may be specifically determined based on an actual use requirement. This is not limited in embodiments of this application.

Optionally, in some embodiments, after the terminal device determines the target area of each of the M first layers, the terminal device may mark a mask in the target area of each of the M first layers, where pixels in an area indicated by the mask are not read.

In some embodiments, whether a pixel is transparent may be determined based on an A component in pixel data of a layer, and mask marking is performed on a transparent pixel at the layer or an area in which the transparent pixel is located. Alternatively, mask marking may be performed on a covered pixel at the layer or an area in which the covered pixel is located. For ease of description, an area marked with a mask may be referred to as a masked area.

Optionally, the mask may be a string of binary code that perform an AND operation on a field corresponding to a pixel, to shield a current field corresponding to the pixel. In a scenario of reading a layer, the field corresponding to the shielded pixel is not read. That is, the masked area may also be understood as a shielded area, and pixels in the shielded area are not read.

On the one hand, if the A component indicates that the pixel is transparent, the pixel is marked with a mask, so that the pixel is not read. For example, if the A component is 00 or 100%, the pixel may be marked with a mask, so that the pixel is not read.

On the other hand, if the A component indicates that the pixel is opaque, the pixel covers a pixel located below, and the pixel located below is masked with a mark, so that the pixel located below is not read. For example, if the A component is FF or 0%, a mask may be marked for a pixel located below the pixel, so that the pixel located below the pixel is not read.

In this way, a transparent area and/or a covered area at a layer may be determined by analyzing pixel transparency components at a plurality of layers and a hierarchical relationship of the layers, and mask marking is performed on the transparent area and/or the covered area, to obtain a masked area. In this way, in embodiments of this application, a coverage and/or transparency situation of a layer are/is analyzed before the layer is read, and data that may not be read is determined based on the coverage and/or transparency situation of the layer, so that these masked areas may not be read when the layer is read, to reduce read bandwidth and power consumption.

S120. Read pixels at the M first layers other than the target area, to obtain M second layers.

In some embodiments, after the terminal device determines the transparent area and/or the covered area of the layer, and marks the mask in the transparent area and/or the covered area, the terminal device may read pixels in image areas of M first layers that are not marked with the mask. In this case, the terminal device may not read pixels in image areas of the M first layers that are marked with the mask. Because a part of pixels that contribute to the display effect are selected to be read when the layer is read, a total quantity of pixels at the M second layers obtained through reading is less than a total quantity of pixels at the M first layers.

On the one hand, as described above, in a scenario in which a multi-layer image is displayed, pixels in a transparent area are invisible due to transparency, and do not contribute to a display effect when being displayed. Therefore, when a layer is read, pixels at the layer other than the transparent area may be read, and pixels in the transparent area of the layer do not need to be read. In this way, read bandwidth and power consumption can be reduced. For example, two layers are used as an example. A layer 1 is an upper layer, and a layer 2 is a lower layer. If there is a transparent layer at the layer 1, when an image obtained by superposing the two layers is displayed, pixels in a transparent area of the layer 1 are invisible due to transparency. Therefore, when the layer 1 is read, the pixels in the transparent area of the layer 1 may not need to be read.

On the other hand, as described above, in a scenario in which a multi-layer image is displayed, pixels in a covered area are invisible due to being covered, and do not contribute to a display effect when being displayed. Therefore, when a layer is read, pixels at the layer other than the covered area may be read, and pixels in the covered area of the layer do not need to be read. In this way, read bandwidth and power consumption can be reduced. For example, two layers are still used as an example. If there is an opaque layer in an upper layer 1, when an image obtained by superposing the two layers is displayed, the opaque layer at the layer 1 covers a part of an area (that is, a covered area) of a lower layer 2, so that pixels in the covered area of the lower layer 2 are invisible due to being covered. Therefore, when the lower layer 2 is read, the pixels in the covered area of the lower layer 2 may not need to be read.

The foregoing describes a situation in which whether a transparent area exists at a layer is first determined, and then all pixels or a part of pixels at the layer are read based on a determination result, and further describes a situation in which whether a covered area exists at a layer is first determined, and then all pixels or a part of pixels at the layer are read based on a determination result. The following performs analysis in combination with the foregoing two situations, that is, determines whether the transparent area and/or the covered area exist/exists at the layer, and then reads all the pixels or the part of pixels at the layer based on the determination result. In an actual implementation, the following situations may exist:
Situation 1. If neither a transparent area nor a covered area exists at a layer, all pixels at the layer are read when the layer is read.
Situation 2. If a transparent area but no covered area exists at a layer, when the layer is read, only a part of pixels at the layer other than the transparent area need to be read, and pixels in the transparent area do not need to be read. In this way, read bandwidth and power consumption can be reduced.
Situation 3. If a covered area but no transparent area exists at a layer, when the layer is read, only a part of pixels at the layer other than the covered area need to be read, and pixels in the covered area do not need to be read. In this way, reading bandwidth and power consumption can be reduced.
Situation 4. If both a transparent area and a covered area exist at a layer, when the layer is read, only a part of pixels at the layer other than the transparent area and the covered area need to be read, and pixels in the transparent area and the covered area do not need to be read. In this way, reading bandwidth and power consumption can be reduced.

Optionally, in embodiments of this application, when the layer is read, the transparent area at the layer may not be read; or when the layer is read, the covered area at the layer may not be read; or when the layer is read, both the transparent area and the covered area at the layer may not be read. Which areas at a specific layer are selected to not be read may be determined based on an actual use requirement. This is not limited in embodiments of this application.

For example, that the M first layers include a top first layer, an intermediate first layer, and a bottom first layer is used as an example. The foregoing S120 includes the following S121 to S123.

S121. Read pixels at a top first layer other than a first target area (that is, a transparent area at a first layer), to obtain a top second layer.

S122. Read pixels at the intermediate first layer other than a second target area (that is, a transparent area at an intermediate first layer and/or an area covered by an opaque area at the top first layer), to obtain an intermediate second layer.

S123. Read pixels at the bottom first layer other than a third target area (that is, a transparent area at a bottom first layer, the area covered by the opaque area at the top first layer, and/or an area covered by an opaque area at the intermediate first layer), to obtain a bottom second layer.

It may be understood that the M second layers include the top second layer, the intermediate second layer, and the bottom second layer. In addition, a hierarchical relationship of the M second layers may be determined based on the hierarchical relationship of the M first layers.

It should be noted that an execution sequence of S121, S122, and S123 is not limited in embodiments of this application. For example, S121, S122, and S123 may be sequentially performed; or S121 and S122 may be simultaneously performed before S123; or S121, S122, and S123 may be simultaneously performed. This may be specifically determined based on an actual use requirement. This is not limited in embodiments of this application.

S130. Display an image obtained by superimposing the M second layers.

As described above, in a scenario of reading a plurality of layers, pixels in image areas of the M first layers that are not marked with a mask may be read, and pixels in image areas of the M first layers that are marked with the mask are not read, to read the M second layers that have the hierarchical relationship. Then, the terminal device may superimpose the M second layers based on the hierarchical relationship, to obtain a target image. Further, the terminal device may display the target image on a display screen.

The following describes, by using an example, a specific implementation of the method for processing a multi-layer image provided in embodiments of this application.

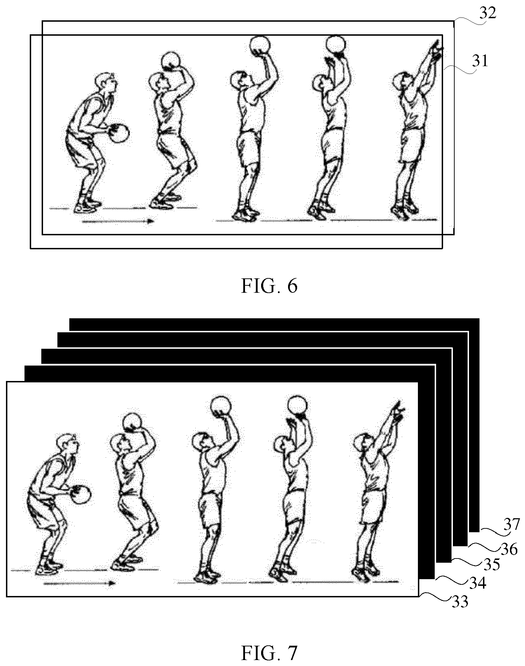

Scenario 1. A display screen displays a dynamic picture. As shown in FIG. 6, the dynamic picture includes two superimposed full-screen layers. A layer 31 is a fully transparent layer, is located at an upper layer, and uses an ARGB data format. A layer 32 is an opaque layer, is located at a lower layer, and uses an XRGB data format, that is, may include or may not include an A component. It is assumed that a refresh rate of the display screen is 120 Hz, a resolution of the display screen is 720*1560, and a pixel format is 32 bits. In this case, based on a conventional solution, the layer 31 and the layer 32 need to be read, and bandwidth required for reading the two layers is: 720*1560*32*120*2=8.62 Gbps. However, based on the method provided in embodiments of this application, when a layer is read, the opaque layer 32 that contributes to the display effect is read, and the fully transparent layer 31 that does not contribute to the display effect does not need to be read. In this case, bandwidth required for reading the layer is: 720*1560*32*120=4.31 Gbps. Compared with the conventional solution, the solution provided in this application can reduce read bandwidth.

Scenario 2. As shown in FIG. 7, a to-be-displayed image is a superimposed five-full-screen layers, and the full-screen layers are all opaque layers and all use an ARGB data format. It is assumed that a refresh rate of the display screen is 60 Hz, a resolution of the display screen is 1440*2560, and a pixel format is 32 bits. In this case, based on a conventional solution, the five opaque layers need to be read, and bandwidth required for reading the five opaque layers is: 1440*2560*32*60*5=35.38 Gbps. However, based on the method provided in embodiments of this application, when a layer is read, only a top opaque layer that contributes to a display effect needs to be read. Bandwidth required for reading the top opaque layer is 1440*2560*32*60=7.07 Gbps, and a covered layer (as shown in a black area in FIG. 7) that does not contribute to the display effect does not need to be read, that is, four full-screen layers are not read. Compared with the conventional solution, the solution provided in this application can reduce read bandwidth.

In embodiments of this application, before the layer is read, it is first determined whether the layer has a covered area and/or a fully transparent area. If the to-be-read layer has the covered area and/or the fully transparent area, the covered area and/or the fully transparent area may not be read when the layer is read. In this way, read bandwidth can be reduced, and power consumption can be reduced.

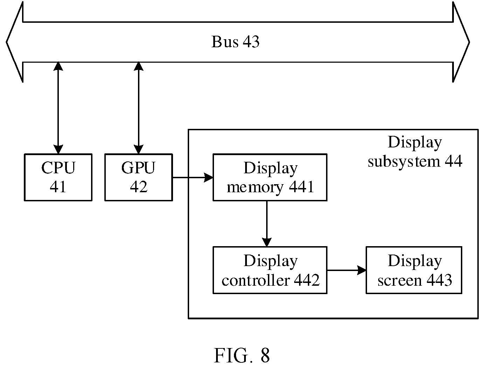

FIG. 8 is a schematic block diagram of an image display principle. The following describes, with reference to FIG. 8, the image display principle as an example, and describes, based on the image display principle, a method for processing a multi-layer image provided in embodiments of this application. As shown in FIG. 8, a central processing unit (central processing unit, CPU) 41 and a graphics processing unit (graphics processing unit, GPU) 42 are connected via a bus 43, and a display sub-system (display sub-system, DSS) 44 includes a display memory 441, a display controller 442, and a display screen 443. A bitmap output by the CPU 41 may be uploaded to the GPU 42 via the bus 43. After obtaining the bitmap, the GPU 42 performs layer rendering and texture synthesis on the bitmap, and then places a result of the rendering in the display memory 441. The display controller 442 extracts content (for example, a plurality of layers) displayed on the screen from the display memory 441 at a specified time based on a vertical synchronization signal, and then displays the content on the display screen 443 (that is, a mobile phone screen).

When a program is running, the GPU performs corresponding processing on a program running process and a result based on instructions and related data provided by the CPU, and converts the program running process and the result into a text and image display signal that can be accepted by a display. Specifically, M first layers are first drawn by using the GPU, then data of the plurality of layers is written into the display memory, and then the data of the plurality of layers is read from the display memory, and are displayed by the display.

The display memory is also referred to as a frame buffer, a frame cache, or a video RAM, and is configured to store rendering data that has been processed by the GPU or is to be extracted.

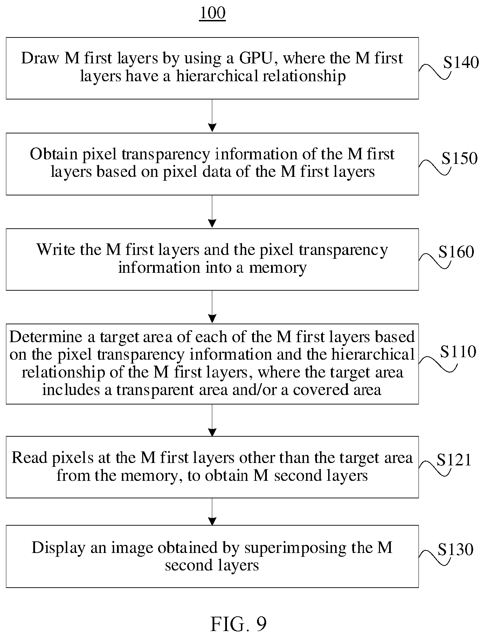

Based on the foregoing image display principle, in embodiments of this application, with reference to FIG. 2, as shown in FIG. 9, before S110, the method 100 for processing a multi-layer image provided in embodiments of this application further includes the following S140.

S140. Draw M first layers by using a GPU, where the M first layers have a hierarchical relationship.

A CPU issues instructions to the GPU, and the GPU draws a plurality of layers, and then writes data of the plurality of layers into a memory.

In some embodiments, as shown in FIG. 9, after S140, the method 100 for processing a multi-layer image provided in embodiments of this application may further include the following S150 and S160:
S150. Obtain pixel transparency information of the M first layers based on pixel data of the M first layers.
S160. Write the M first layers and the pixel transparency information into the memory.

After drawing the M first layers by using the GPU, the terminal device divides each of the M first layers into N image blocks (N is an integer greater than 1), and then traverses all pixel data in each image block, to obtain pixel transparency information corresponding to each image block. Further, the terminal device compresses each image block at the M first layers and corresponding pixel transparency information, and then writes a compressed image block and compressed information into the memory. Still further, pixels at the M first layers other than a transparent area and/or a covered area are read from the memory, to obtain M second layers (refer to S121 in FIG. 9).

The memory may be a double data rate synchronous dynamic random access memory (double data rate synchronous dynamic random access memory), which is DDR for short.

In this application, hardware is used to predetermine a transparency and coverage attribute of a layer before the layer is superimposed, and determine a transparent area and/or a covered area at the layer based on the transparency and coverage attribute of the layer. When the layer is read, the transparent area and/or the covered area may not be read, thereby reducing read bandwidth of the layer and reducing display power consumption.

During an actual implementation, a field corresponding to each image block of the M first layers may include a header (header) field and a data field. The header field and the data field that are corresponding to each image block of the M first layers may be written into the memory, so that each image block of the M first layers and the corresponding pixel transparency information is compressed and then written into the memory. The data field corresponding to each image block may include pixel values of all pixels in each image block. For content in the header field corresponding to each image block, this application provides the following two possible implementations.

Manner 1: A header field corresponding to each image block may include transparency information of all pixels in each image block.

For example, a header field corresponding to an image block 1 includes transparency information of all pixels in the image block 1.

Manner 2: A header field corresponding to each image block may include transparency information of a part of pixels in each image block, and the part of pixels are located in a transparent area and/or an opaque area. Because the header field stores only information used to determine the transparent area and/or the covered area of the layer, information redundancy can be reduced.

For example, the header field corresponding to the image block 1 includes transparency information of pixels in the transparent area and/or the opaque area in the block 1. For example, the header field includes indication information of the following specific pixels: A pixel 1 corresponds to 00 or 100%, or another flag indicating that a pixel is transparent; and a pixel 2 corresponds to FF or 0%, or another flag indicating that a pixel is opaque.

In this way, when the header field and the data field include the pixel transparency information and the hierarchical relationship of each layer, the transparent area and/or the covered area of each of the M first layers may be determined based on a header field and a data field that correspond to each of N image blocks in each first layer.

Specifically, in embodiments of this application, in a process in which the GPU finishes drawing the layer and writes the layer into the memory, to reduce bandwidth, a compression algorithm is used. The compression algorithm traverses all pixel data in each block of the layer. By using this function, a function of collecting statistics on the A component may be added in a compression process, and a measurement result is stored in the memory in a form of header data (that is, the foregoing header field). When the DSS sends an S^{th} frame (representing a previous frame), after the GPU draws an (S+1)^{th} frame (representing a next frame), the DSS may analyze header data of blocks of each layer in the (S+1)^{th} frame to obtain transparency or coverage characteristics of the entire layer, and skip content of a transparent area of each layer in the (S+1)^{th} frame and/or content covered by another layer when the (S+1)^{th} frame is sent for display, to save bandwidth.

After the GPU draws the layer, the layer is compressed, and during compression, statistics on the A component of each pixel in each block may be collected by using a flag. For example, a 2-bit flag (flag) may be used to mark the measurement result: if the A components are 00, a flag 1 is used in the header data to represent that all the A components are 00; and if the A components are all FF, a flag 2 is used in the header data to represent that all the A components are FF. Then, the header data of each block that includes identification information is written into the memory, to facilitate identifying the measurement result.

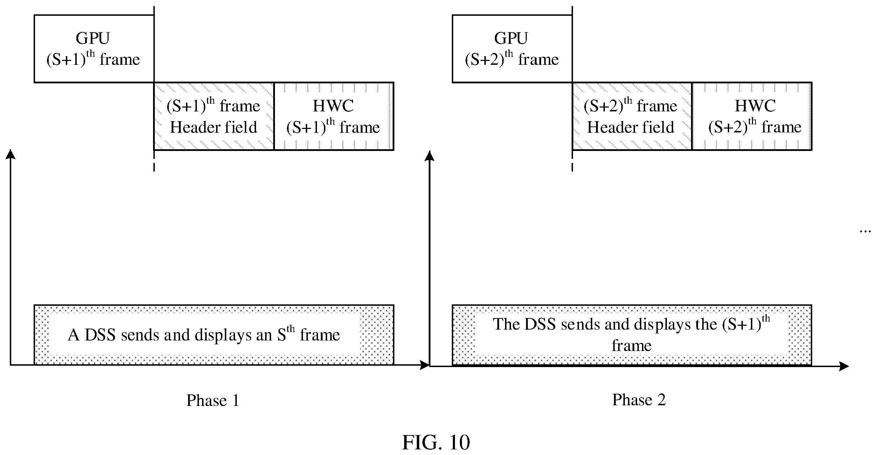

The solutions provided in embodiments of this application are described illustratively below in conjunction with FIG. 10. As shown in FIG. 10, phase 1: when a DSS sends and displays an S^{th} frame, after a GPU finishes drawing an (S+1)^{th} frame, software configures the DSS to enter a background analysis process, and detects identification information in a header field of the (S+1)^{th} frame. After the detection is completed, the software calculates coordinates of a masked area (for example, a transparent area and/or a covered area) of each layer of the (S+1)^{th} frame. In addition, a hardware composer (hardware composer, HWC) may be used to perform a layer synthesis on each layer of the (S+1)^{th} frame. Phase 2: when the DSS sends and displays the (S+1)^{th} frame, the masked area that does not need to be read can be skipped based on the coordinates of the masked area of each layer, to save bandwidth. Reading and displaying of the subsequent (S+2)^{th} frame, (S+3)^{th} frame, and the like are similar to reading and displaying of the (S+1)^{th} frame. Details are not described herein again.

In conclusion, transparency information of layers is collected at the GPU of the drawing, and a plurality of layers and transparency information of the layers are written into the memory. Before a frame image is read, a DSS background is used to analyze a coverage and/or transparency situation of each layer in the frame image. Then, when the frame image is read, the covered area and/or the fully transparent area at the layer may be skipped based on an analysis result of the coverage and/or transparency situation of the layer, thereby reducing read bandwidth and power consumption.

The method for processing a multi-layer image provided in embodiments of this application may determine a target area of each of M first layers based on pixel transparency information and a hierarchical relationship of the M first layers, where the target area includes a transparent area and/or a covered area (that is, an area covered by an opaque area of an upper layer); and then read pixels at the M first layers other than the target area to obtain M second layers. Then, an image obtained by superimposing the M second layers is displayed, where a total quantity of pixels at the M second layers is less than a total quantity of pixels at the M first layers. Through solutions of this application, before a layer is read, a transparent area and/or a coverage area at the layer can be first determined by analyzing a transparency and/or coverage situation of the layer based on pixel transparency components at a plurality of layers and a hierarchical relationship of the layers. Because the transparent area and/or the covered area do/does not contribute to a display effect when being displayed, content of these areas may not be read. Therefore, when the layer is read, content that contributes to the display effect of the read layer is selected to be read, and the transparent areas and/or the covered areas are not read. In this way, read bandwidth can be reduced, and power consumption can be reduced.

Embodiments described in this specification may be independent solutions, or may be combined based on internal logic. All these solutions fall within the protection scope of this application.

It may be understood that in the foregoing method embodiments, the methods and operations implemented by the terminal device may alternatively be implemented by a component (for example, a chip or a circuit) that can be used in the terminal device.

The foregoing describes the method embodiments provided in this application, and the following describes apparatus embodiments provided in this application. It should be understood that descriptions of apparatus embodiments correspond to the descriptions of the method embodiments. Therefore, for content that is not described in detail, refer to the foregoing method embodiments. For brevity, details are not described herein again.

The foregoing mainly describes the solutions provided in embodiments of this application from a perspective of method steps. It may be understood that, to implement the foregoing functions, the terminal device implementing the method includes corresponding hardware structures and/or software modules for performing the functions. A person skilled in the art should be able to be aware that, in combination with the examples described in embodiments disclosed in this specification, units and algorithm steps can be implemented by hardware or a combination of hardware and computer hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the protection scope of this application.

In embodiments of this application, the terminal device may be divided into function modules based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that in embodiments of this application, division into the modules is an example, and is merely logical function division. In actual implementation, another division manner may be used. An example in which each functional module is obtained through division based on each corresponding function is used below for description.

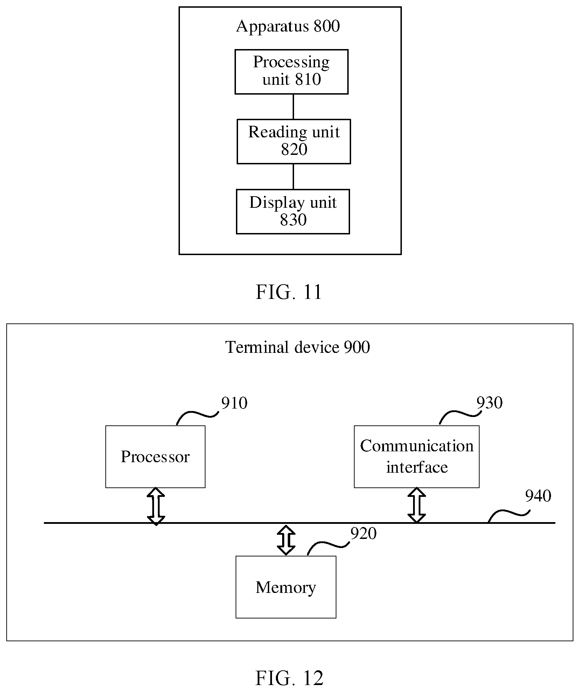

FIG. 11 is a schematic block diagram of a media data processing apparatus 800 according to an embodiment of this application. The apparatus 800 may be configured to perform an action performed by the terminal device in the foregoing method embodiments. The apparatus 800 includes a processing unit 810, a reading unit 820, and a display unit 830.

The processing unit 810 is configured to determine a target area of each of M first layers based on pixel transparency information and a hierarchical relationship of the M first layers, where the target area includes a transparent area and/or a covered area.

The reading unit 820 is configured to read pixels at the M first layers other than the target area to obtain M second layers, where a total quantity of pixels at the M second layers is less than a total quantity of pixels at the M first layers.

The display unit 830 is configured to display an image obtained by superposing the M second layers.

The covered area is an area covered by an opaque area of an upper layer, pixel transparency information corresponding to a pixel in the opaque area indicates that the pixel is opaque, pixel transparency information corresponding to a pixel in the transparent area indicates that the pixel is transparent, and M is an integer greater than 1.

In some embodiments, if the M first layers include a top first layer, an intermediate first layer, and a bottom first layer, the processing unit 810 is further configured to:
determine a transparent area at the top first layer as a first target area of the top first layer;
determine a transparent area at the intermediate first layer and/or an area covered by an opaque area at the top first layer as a second target area of the intermediate first layer; and
determine a transparent area at the bottom first layer, the area covered by the opaque area at the top first layer, and/or an area covered by an opaque area at the intermediate first layer as a third target area of the bottom first layer.

In some embodiments, the reading unit 820 is further configured to:
read pixels at the top first layer other than the first target area, to obtain a top second layer;
read pixels at the intermediate first layer other than the second target area, to obtain an intermediate second layer;
read pixels at the bottom first layer other than the third target area, to obtain a bottom second layer, where
the M second layers include the top second layer, the intermediate second layer, and the bottom second layer.

In some embodiments, the processing unit 810 is further configured to: after the target area of each of the M first layers is determined, mark a mask in the target area of each of the M first layers, where pixels in an area indicated by the mask are not allowed to be read.

The reading unit 820 is further configured to: read pixels in image areas that are not marked with the mask at the M first layers, and skip reading pixels in image areas that are marked with the mask at the M first layers.

The processing unit 810 is further configured to: before the target area of each of the M first layers is determined, draw the M first layers by using a graphics processing unit GPU, where the M first layers have the hierarchical relationship.

The processing unit 810 is further configured to: after drawing the M first layers by using the GPU, obtain the pixel transparency information of the M first layers based on pixel data of the M first layers; and write the M first layers and the pixel transparency information into a memory.

The reading unit 820 is further configured to: read pixels at the M first layers other than the target area from the memory.

The processing unit 810 is further configured to:
divide each of the M first layers into N image blocks, where N is an integer greater than 1;
traverse all pixel data in each image block, to obtain pixel transparency information corresponding to each image block; and
compress each image block at the M first layers and corresponding pixel transparency information, and write a compressed image block and compressed information into the memory.

A field corresponding to each image block of the M first layers includes a header field and a data field. The header field corresponding to each image block includes transparency information of all pixels or a part of pixels in each image block. The part of pixels are located in the transparent area and/or the opaque area. The data field corresponding to each image block includes pixel values of all pixels in each image block.

The processing unit 810 is further configured to: write, into the memory, the header field and the data field that correspond to each image block of the M first layers; and determine the target area of each of the M first layers based on a header field and a data field that correspond to each of N image blocks in each first layer.

In some embodiments, the M first layers are images in an RGBA or ARGB data format, where R, G, and B separately represent a color component of a pixel, and A represents a transparency component of a pixel.

In some embodiments, the processing unit 810 is further configured to determine a hierarchical relationship of the M second layers based on the hierarchical relationship of the M first layers.

The display unit 830 is further configured to superimpose the M second layers based on the hierarchical relationship of the M second layers, to obtain a target image; and display the target image on a display screen of the apparatus 800.

Embodiments of this application provide an apparatus for processing a multi-layer image. The apparatus may determine a target area of each of M first layers based on pixel transparency information and a hierarchical relationship of the M first layers, where the target area includes a transparent area and/or a covered area (that is, an area covered by an opaque area of an upper layer). In addition, the apparatus reads pixels at the M first layers other than the target area, to obtain M second layers. Then, the apparatus displays an image obtained by superimposing the M second layers, where a total quantity of pixels at the M second layers is less than a total quantity of pixels at the M first layers. Through solutions of this application, before a layer is read, a transparent area and/or a coverage area at the layer can be first determined by analyzing a transparency and/or coverage situation of the layer based on pixel transparency components at a plurality of layers and a hierarchical relationship of the layers. Because the transparent area and/or the covered area do/does not contribute to a display effect when being displayed, content of these areas may not be read. That is, when the layer is read, content that contributes to the display effect of the read layer is selected to be read, and the transparent areas and/or the covered areas are not read. In this way, read bandwidth can be reduced, and power consumption can be reduced.

The apparatus 800 in this embodiment of this application may correspondingly perform the method described in embodiments of this application. In addition, the foregoing and other operations and/or functions of the units in the apparatus 800 are used to implement corresponding procedures of the method. For brevity, details are not described herein again.

FIG. 12 is a schematic structural diagram of a terminal device 900 according to an embodiment of this application. The terminal device 900 includes a processor 910, a memory 920, a communication interface 930, and a bus 940.

The processor 910 may be connected to the memory 920. The memory 920 may be configured to store the program code and data. Therefore, the memory 920 may be an internal storage unit of the processor 910, an external storage unit independent of the processor 910, or a component including the internal storage unit of the processor 910 and the external storage unit independent of the processor 910. It should be noted that the processor 910 in the terminal device 900 shown in FIG. 12 may be corresponding to the processing unit 810 in the apparatus 800 in FIG. 11.

Optionally, the terminal device 900 may further include the bus 940. The memory 920 and the communication interface 930 may be connected to the processor 910 via the bus 940. The bus 940 may be a peripheral component interconnect (peripheral component interconnect, PCI) bus, an extended industry standard architecture (extended industry standard architecture, EISA) bus, or the like. The bus 940 may be categorized as an address bus, a data bus, a control bus, or the like. For ease of indication, the bus is indicated by using only one line in FIG. 12. However, it does not indicate that there is only one bus or only one type of bus.

It should be understood that in embodiments of this application, the processor 910 may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like. Alternatively, the processor 810 is configured to execute a related program by using one or more integrated circuits, to implement technical solutions provided in embodiments of this application.

The memory 920 may include a read-only memory and a random access memory, and provides instructions and data to the processor 910. A part of the processor 910 may further include a non-volatile random access memory. For example, the processor 910 may further store device type information.

When the terminal device 900 is running, the processor 910 executes computer-executable instructions in the memory 920 to perform operation steps of the foregoing methods.

It should be understood that the terminal device 900 according to embodiments of this application may correspond to the apparatus 800 in embodiments of this application, and the foregoing and other operations and/or functions of the units in the apparatus 800 are used to implement corresponding procedures of the method. For brevity, details are not described herein again.

Optionally, in some embodiments, an embodiment of this application further provides a computer-readable medium. The computer-readable medium stores program code. When the computer program code is run on a computer, the computer is enabled to perform the method in the foregoing aspects.

Optionally, in some embodiments, embodiments of this application further provide a computer program product. The computer program product includes computer program code. When the computer program code is run on a computer, the computer is enabled to perform the method in the foregoing aspects.

A specific structure of an execution entity of the method provided in embodiments of this application is not particularly limited in embodiments of this application, provided that a program that records code of the method provided in embodiments of this application can be run to process the layer image based on the method provided in embodiments of this application. For example, the method provided in embodiments of this application may be performed by a terminal device, or may be performed by a functional module that can invoke a program and execute the program in the terminal device.

Aspects or features of this application may be implemented as a method, an apparatus, or a product that uses standard programming and/or engineering technologies. The term "product" used in this specification may cover a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive).

Various storage media described in this specification may indicate one or more devices and/or other machine-readable media that are configured to store information. The term "machine-readable media" may include but is not limited to a radio channel and various other media that can store, include, and/or carry instructions and/or data.

It should be understood that, the processor mentioned in embodiments of this application may be a CPU or may be another general purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should further be noted that the memory described in this specification aims to include but is not limited to these memories and any memory of another proper type.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a computer software product. The computer software product is stored in a storage medium, and includes several instructions for instructing a computer device (which may be a personal computer, a server, a network device, or the like) to perform all or some of the steps of the method described in embodiments of this application. The foregoing storage medium may include but is not limited to any medium that can store program code, such as a USB flash drive, a removable hard disk, a ROM, a RAM, a magnetic disk, or an optical disc.

Unless otherwise defined, all technical and scientific terms used in this specification have same meanings as those usually understood by a person skilled in the art of this application. The terms used in the specification of this application are merely for the purpose of describing specific embodiments, and are not intended to limit this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for processing a multi-layer image, comprising:
determining (S110), a target area of each of M first layers based on pixel transparency information and a hierarchical relationship of the M first layers, wherein the target area comprises a transparent area and/or a covered area;
reading (S120), pixels at the M first layers other than the target area to obtain M second layers, wherein a total quantity of pixels at the M second layers is less than a total quantity of pixels at the M first layers; and
displaying (S130), an image obtained by superimposing the M second layers, wherein
the covered area is an area covered by an opaque area of an upper layer, pixel transparency information corresponding to a pixel in the opaque area indicates that the pixel is opaque, pixel transparency information corresponding to a pixel in the transparent area indicates that the pixel is transparent, and M is an integer greater than 1,
wherein before the determining (S110), a target area of each of M first layers, the method further comprises:
drawing (S140), the M first layers by using a graphics processing unit, GPU, wherein the M first layers have the hierarchical relationship;
wherein after the drawing (S140), the M first layers by using a GPU, the method further comprises:
obtaining (S150), the pixel transparency information of the M first layers based on pixel data of the M first layers; and
writing (S160), the M first layers and the pixel transparency information into a memory, wherein
the reading (S120), pixels at the M first layers other than the target area comprises:
reading (S121), pixels at the M first layers other than the target area from the memory;
wherein the obtaining (S150), the pixel transparency information of the M first layers comprises:
dividing each of the M first layers into N image blocks, wherein N is an integer greater than 1; and
**characterised by**:
traversing all pixel data in each image block, to obtain pixel transparency information corresponding to each image block, wherein
the writing (S160), the M first layers and the pixel transparency information into a memory comprises:
compressing each image block at the M first layers and corresponding pixel transparency information, and writing a compressed image block and compressed information into the memory,
wherein a field corresponding to each image block of the M first layers comprises a header field and a data field, the header field corresponding to each image block comprises transparency information of all pixels or a part of pixels in each image block, the part of pixels are located in the transparent area and/or the opaque area, and the data field corresponding to each image block comprises pixel values of all pixels in each image block; and
the compressing each image block at the M first layers and corresponding pixel transparency information, and writing a compressed image block and compressed information into the memory comprises:
writing, into the memory, the header field and the data field that correspond to each image block of the M first layers, wherein
the determining (S110), a target area of each of M first layers based on pixel transparency information and a hierarchical relationship of the M first layers comprises:
determining the target area of each of the M first layers based on a header field and a data field that correspond to each of N image blocks in each first layer.

2. The method according to claim 1, wherein when the M first layers comprise a top first layer, an intermediate first layer, and a bottom first layer, the determining a target area of each of M first layers based on pixel transparency information and a hierarchical relationship of the M first layers comprises:
determining a transparent area at the top first layer as a first target area of the top first layer;
determining a transparent area at the intermediate first layer and/or an area covered by an opaque area at the top first layer as a second target area of the intermediate first layer; and
determining a transparent area at the bottom first layer, the area covered by the opaque area at the top first layer, and/or an area covered by an opaque area at the intermediate first layer as a third target area of the bottom first layer.

3. The method according to claim 2, wherein the reading pixels at the M first layers other than the target area to obtain M second layers comprises:
reading pixels at the top first layer other than the first target area, to obtain a top second layer;
reading pixels at the intermediate first layer other than the second target area, to obtain an intermediate second layer; and
reading pixels at the bottom first layer other than the third target area, to obtain a bottom second layer, wherein
the M second layers comprise the top second layer, the intermediate second layer, and the bottom second layer.

4. The method according to any one of claims 1 to 3, wherein after the determining a target area of each of M first layers, and before the reading pixels at the M first layers other than the target area, the method further comprises:
marking a mask in the target area of each of the M first layers, wherein pixels in an area indicated by the mask are not allowed to be read; and
the reading pixels at the M first layers other than the target area comprises:
reading pixels in image areas that are not marked with the mask at the M first layers; and
skipping reading pixels in image areas that are marked with the mask at the M first layers.

5. The method according to any one of claims 1 to 4, wherein the M first layers are images using an RGBA or ARGB data format, wherein R, G, and B separately represent a color component of a pixel, and A represents a transparency component of a pixel.

6. The method according to any one of claims 1 to 5, wherein the displaying an image obtained by superposing the M second layers comprises:
determining a hierarchical relationship of the M second layers based on the hierarchical relationship of the M first layers;
superimposing the M second layers based on the hierarchical relationship of the M second layers, to obtain a target image; and
displaying the target image on a display screen.

7. An apparatus for processing a multi-layer image, comprising a processing unit, a reading unit, and a display unit, wherein
the processing unit is configured to determine a target area of each of M first layers based on pixel transparency information and a hierarchical relationship of the M first layers, wherein the target area comprises a transparent area and/or a covered area;
the reading unit is configured to read pixels at the M first layers other than the target area to obtain M second layers, wherein a total quantity of pixels at the M second layers is less than a total quantity of pixels at the M first layers; and
the display unit is configured to display an image obtained by superposing the M second layers, wherein
the covered area is an area covered by an opaque area of an upper layer, pixel transparency information corresponding to a pixel in the opaque area indicates that the pixel is opaque, pixel transparency information corresponding to a pixel in the transparent area indicates that the pixel is transparent, and M is an integer greater than 1,
wherein the processing unit is further configured to: before the target area of each of the M first layers is determined, draw the M first layers by using a graphics processing unit, GPU, wherein the M first layers have the hierarchical relationship;
wherein the processing unit is further configured to: after the drawing the M first layers by using a GPU, obtain the pixel transparency information of the M first layers based on pixel data of the M first layers; and write the M first layers and the pixel transparency information into a memory; and
the reading unit is further configured to: read pixels at the M first layers other than the target area from the memory;
wherein the processing unit is further configured to:
divide each of the M first layers into N image blocks, wherein N is an integer greater than 1;
**characterised in that** the processing unit is further configured to:
traverse all pixel data in each image block, to obtain pixel transparency information corresponding to each image block; and
compress each image block at the M first layers and corresponding pixel transparency information, and write compressed image block and information into the memory,
wherein a field corresponding to each image block of the M first layers comprises a header field and a data field, the header field corresponding to each image block comprises transparency information of all pixels or a part of pixels in each image block, the part of pixels are located in the transparent area and/or the opaque area, and the data field corresponding to each image block comprises pixel values of all pixels in each image block; and
the processing unit is further configured to: write, into the memory, the header field and the data field that correspond to each image block of the M first layers; and determine the target area of each of the M first layers based on a header field and a data field that correspond to each of N image blocks in each first layer.

8. The apparatus according to claim 7, wherein when the M first layers comprise a top first layer, an intermediate first layer, and a bottom first layer, the processing unit is further configured to:
determine a transparent area at the top first layer as a first target area of the top first layer;
determine a transparent area at the intermediate first layer and/or an area covered by an opaque area at the top first layer as a second target area of the intermediate first layer; and
determine a transparent area at the bottom first layer, the area covered by the opaque area at the top first layer, and/or an area covered by an opaque area at the intermediate first layer as a third target area of the bottom first layer.

9. The apparatus according to claim 8, wherein the reading unit is further configured to:
read pixels at the top first layer other than the first target area, to obtain a top second layer;
read pixels at the intermediate first layer other than the second target area, to obtain an intermediate second layer; and
read pixels at the bottom first layer other than the third target area, to obtain a bottom second layer, wherein
the M second layers comprise the top second layer, the intermediate second layer, and the bottom second layer.

10. The apparatus according to any one of claims 7 to 9, wherein
the processing unit is further configured to: after the target area of each of the M first layers is determined, mark a mask in the target area of each of the M first layers, wherein pixels in an area indicated by the mask are not allowed to be read; and
the reading unit is further configured to: read pixels in image areas that are not marked with the mask at the M first layers, and skip reading pixels in image areas that are marked with the mask at the M first layers.

11. The apparatus according to any one of claims 7 to 10, wherein the M first layers are images using an RGBA or ARGB data format, and wherein R, G, and B separately represent a color component of a pixel, and A represents a transparency component of a pixel.

12. The apparatus according to any one of claims 7 to 11, wherein
the processing unit is further configured to determine a hierarchical relationship of the M second layers based on the hierarchical relationship of the M first layers; and
the display unit is further configured to superimpose the M second layers based on the hierarchical relationship of the M second layers to obtain a target image; and display the target image on a display screen of the apparatus.

13. A computer-readable storage medium, wherein the computer-readable storage medium stores a computer program, and when the computer program is run on a terminal device, the terminal device is enabled to perform the method according to any one of claims 1 to 6.

14. A computer program product, wherein the computer program product comprises a computer program, and when the computer program is executed by a computer, the computer is enabled to implement the method according to any one of claims 1 to 6.

## Patentansprüche

1. Verfahren zur Verarbeitung eines mehrschichtigen Bildes, umfassend:
Bestimmen (S110) eines Zielbereichs von jeder von M ersten Schichten basierend auf Pixeltransparenzinformationen und einer hierarchischen Beziehung der M ersten Schichten, wobei der Zielbereich einen transparenten Bereich und/oder einen abgedeckten Bereich umfasst;
Lesen (S120) von Pixeln an den M ersten Schichten, die von dem Zielbereich verschieden sind, um M zweite Schichten zu erhalten, wobei eine Gesamtmenge von Pixeln an den M zweiten Schichten kleiner als eine Gesamtmenge von Pixeln an den M ersten Schichten ist; und
Anzeigen (S130) eines Bildes, das durch Überlagern der M zweiten Schichten erhalten wird, wobei
der abgedeckte Bereich ein Bereich ist, der durch einen opaken Bereich einer oberen Schicht abgedeckt wird, Pixeltransparenzinformationen, die einem Pixel in dem opaken Bereich entsprechen, angeben, dass das Pixel opak ist, Pixeltransparenzinformationen, die einem Pixel in dem transparenten Bereich entsprechen, angeben, dass das Pixel transparent ist, und M eine ganze Zahl größer als 1 ist,
wobei das Verfahren vor dem Bestimmen (S110) eines Zielbereichs von jeder der M ersten Schichten des Weiteren Folgendes umfasst:
Zeichnen (S140) der M ersten Schichten unter Verwendung einer Grafikverarbeitungseinheit, GPU, wobei die M ersten Schichten die hierarchische Beziehung haben;
wobei das Verfahren nach dem Zeichnen (S140) der M ersten Schichten unter Verwendung einer GPU des Weiteren Folgendes umfasst:
Erhalten (S150) der Pixeltransparenzinformationen der M ersten Schichten basierend auf Pixeldaten der M ersten Schichten; und
Schreiben (S160) der M ersten Schichten und der Pixeltransparenzinformationen in einen Speicher, wobei das Lesen (S120) von Pixeln an den M ersten Schichten, die von dem Zielbereich verschieden sind, Folgendes umfasst:
Lesen (S121) von Pixeln an den M ersten Schichten, die von dem Zielbereich verschieden sind, aus dem Speicher;
wobei das Erhalten (S150) der Pixeltransparenzinformationen der M ersten Schichten Folgendes umfasst:
Teilen von jeder der M ersten Schichten in N Bildblöcke, wobei N eine ganze Zahl größer als 1 ist; und
**gekennzeichnet durch**:
Durchlaufen aller Pixeldaten in jedem Bildblock, um Pixeltransparenzinformationen zu erhalten, die jedem Bildblock entsprechen, wobei
das Schreiben (S160) der M ersten Schichten und der Pixeltransparenzinformationen in einen Speicher Folgendes umfasst:
Komprimieren jedes Bildblocks an den M ersten Schichten und entsprechenden Pixeltransparenzinformationen, und Schreiben eines komprimierten Bildblocks und komprimierter Informationen in den Speicher,
wobei ein Feld, das jedem Bildblock der M ersten Schichten entspricht, ein "Header"-Feld und ein Datenfeld umfasst, wobei das "Header"-Feld, welches jedem Bildblock entspricht, Transparenzinformationen aller Pixel oder eines Teils von Pixeln in jedem Bildblock umfasst, der Teil von Pixeln sich in dem transparenten Bereich und/oder dem opaken Bereich befindet, und das Datenfeld, welches jedem Bildblock entspricht, Pixelwerte von allen Pixeln in jedem Bildblock umfasst; und
das Komprimieren jedes Bildblocks an den M ersten Schichten und entsprechenden Pixeltransparenzinformationen und Schreiben eines komprimierten Bildblocks und komprimierter Informationen in den Speicher Folgendes umfasst:
Schreiben des "Header"-Felds und des Datenfelds, die jedem Bildblock der M ersten Schichten entsprechen, in den Speicher, wobei
das Bestimmen (S110) eines Zielbereichs von jeder von M ersten Schichten basierend auf Pixeltransparenzinformationen und einer hierarchischen Beziehung der M ersten Schichten Folgendes umfasst:
Bestimmen des Zielbereichs von jeder der M ersten Schichten basierend auf einem "Header"-Feld und einem Datenfeld, die jedem der N Bildblöcke in jeder ersten Schicht entsprechen.

2. Verfahren gemäß Anspruch 1, wobei, wenn die M ersten Schichten eine oberste erste Schicht, eine erste Zwischenschicht und eine unterste erste Schicht umfassen, das Bestimmen eines Zielbereichs von jeder der M ersten Schichten basierend auf Pixeltransparenzinformationen und einer hierarchischen Beziehung der M ersten Schichten Folgendes umfasst:
Bestimmen eines transparenten Bereichs an der obersten ersten Schicht als einen ersten Zielbereich der obersten ersten Schicht;
Bestimmen eines transparenten Bereichs an der ersten Zwischenschicht und/oder eines Bereichs, der von einem opaken Bereich an der obersten ersten Schicht abgedeckt ist, als einen zweiten Zielbereich der ersten Zwischenschicht; und
Bestimmen eines transparenten Bereichs an der untersten ersten Schicht, des Bereichs, der durch den opaken Bereich an der obersten ersten Schicht abgedeckt ist, und/oder eines Bereichs, der durch einen opaken Bereich an der ersten Zwischenschicht abgedeckt ist, als einen dritten Zielbereich der untersten ersten Schicht.

3. Verfahren gemäß Anspruch 2, wobei das Lesen von Pixeln an den M ersten Schichten, die von dem Zielbereich verschieden sind, um M zweite Schichten zu erhalten, Folgendes umfasst:
Lesen von Pixeln an der obersten ersten Schicht, die von dem ersten Zielbereich verschieden ist, um eine oberste zweite Schicht zu erhalten;
Lesen von Pixeln an der ersten Zwischenschicht, die von dem zweiten Zielbereich verschieden ist, um eine zweite Zwischenschicht zu erhalten; und
Lesen von Pixeln an der untersten ersten Schicht, die von dem dritten Zielbereich verschieden ist, um eine unterste zweite Schicht zu erhalten; wobei
die M zweiten Schichten die oberste zweite Schicht, die zweite Zwischenschicht und die unterste zweite Schicht umfassen.

4. Verfahren gemäß einem der Ansprüche 1 bis 3, wobei das Verfahren nach dem Bestimmen eines Zielbereichs von jeder der M ersten Schichten und vor dem Lesen von Pixeln an den M ersten Schichten, die von dem Zielbereich verschieden sind, des Weiteren Folgendes umfasst:
Markieren einer Maske in dem Zielbereich von jeder der M ersten Schichten, wobei Pixel in einem Bereich, der von der Maske angegeben wird, nicht gelesen werden dürfen; und
das Lesen von Pixeln an den M ersten Schichten, die von dem Zielbereich verschieden sind, Folgendes umfasst:
Lesen von Pixeln in Bildbereichen, die nicht mit der Maske markiert sind, an den M ersten Schichten; und
Überspringen des Lesens von Pixeln in Bildbereichen, die mit der Maske markiert sind, an den M ersten Schichten.

5. Verfahren gemäß einem der Ansprüche 1 bis 4, wobei die M ersten Schichten Bilder sind, die ein RGBA- oder ARGB-Datenformat verwenden, wobei R, G und B separat eine Farbkomponente eines Pixels repräsentieren, und A eine Transparenzkomponente eines Pixels repräsentiert.

6. Verfahren gemäß einem der Ansprüche 1 bis 5, wobei das Anzeigen eines Bildes, welches durch Überlagern der M zweiten Schichten erhalten wird, Folgendes umfasst:
Bestimmen einer hierarchischen Beziehung der M zweiten Schichten basierend auf der hierarchischen Beziehung der M ersten Schichten;
Überlagern der M zweiten Schichten basierend auf der hierarchischen Beziehung der M zweiten Schichten, um ein Zielbild zu erhalten; und
Anzeigen des Zielbildes auf einem Anzeigebildschirm.

7. Vorrichtung zum Verarbeiten eines mehrschichtigen Bildes, umfassend eine Verarbeitungseinheit, eine Leseeinheit und eine Anzeigeeinheit, wobei
die Verarbeitungseinheit konfiguriert ist zum Bestimmen eines Zielbereichs von jeder von M ersten Schichten basierend auf Pixeltransparenzinformationen und einer hierarchischen Beziehung der M ersten Schichten, wobei der Zielbereich einen transparenten Bereich und/oder einen abgedeckten Bereich umfasst;
die Leseeinheit konfiguriert ist zum Lesen von Pixeln an den M ersten Schichten, die von dem Zielbereich verschieden sind, um M zweite Schichten zu erhalten, wobei eine Gesamtmenge von Pixeln an den M zweiten Schichten kleiner als eine Gesamtmenge von Pixeln an den M ersten Schichten ist; und
die Anzeigeeinheit konfiguriert ist zum Anzeigen eines Bildes, welches durch Überlagern der M zweiten Schichten erhalten wird, wobei
der abgedeckte Bereich ein Bereich ist, der durch einen opaken Bereich einer oberen Schicht abgedeckt wird, Pixeltransparenzinformationen, die einem Pixel in dem opaken Bereich entsprechen, angeben, dass das Pixel opak ist, Pixeltransparenzinformationen, die einem Pixel in dem transparenten Bereich entsprechen, angeben, dass das Pixel transparent ist, und M eine ganze Zahl größer als 1 ist,
wobei die Verarbeitungseinheit des Weiteren konfiguriert ist zum: Zeichnen der M ersten Schichten, bevor der Zielbereich von jeder der M ersten Schichten bestimmt wird, unter Verwendung einer Grafikverarbeitungseinheit, GPU, wobei die M ersten Schichten die hierarchische Beziehung aufweisen;
wobei die Verarbeitungseinheit des Weiteren konfiguriert ist zum: Erhalten der Pixeltransparenzinformationen der M ersten Schichten basierend auf Pixeldaten der M ersten Schichten, nachdem die M ersten Schichten unter Verwendung einer GPU gezeichnet worden sind; und Schreiben der M ersten Schichten und der Pixeltransparenzinformationen in einen Speicher; und
wobei die Leseeinheit des Weiteren konfiguriert ist zum: Lesen von Pixeln an den M ersten Schichten, die von dem Zielbereich verschieden sind, aus dem Speicher;
wobei die Verarbeitungseinheit des Weiteren konfiguriert ist zum:
Teilen von jeder der M ersten Schichten in N Bildblöcke, wobei N eine ganze Zahl größer als 1 ist;
**dadurch gekennzeichnet, dass** die Verarbeitungseinheit des Weiteren konfiguriert ist zum:
Durchlaufen aller Pixeldaten in jedem Bildblock, um Pixeltransparenzinformationen zu erhalten, die jedem Bildblock entsprechen; und
Komprimieren jedes Bildblocks an den M ersten Schichten und entsprechenden Pixeltransparenzinformationen, und Schreiben des komprimierten Bildblocks und der Informationen in den Speicher,
wobei ein Feld, das jedem Bildblock der M ersten Schichten entspricht, ein "Header"-Feld und ein Datenfeld umfasst, wobei das "Header"-Feld, welches jedem Bildblock entspricht, Transparenzinformationen aller Pixel oder eines Teils von Pixeln in jedem Bildblock umfasst, der Teil von Pixeln sich in dem transparenten Bereich und/oder dem opaken Bereich befindet, und das Datenfeld, welches jedem Bildblock entspricht, Pixelwerte von allen Pixeln in jedem Bildblock umfasst; und
die Verarbeitungseinheit des Weiteren konfiguriert ist zum: Schreiben des "Header"-Felds und des Datenfelds, die jedem Bildblock der M ersten Schichten entsprechen, in den Speicher; und Bestimmen des Zielbereichs von jeder der M ersten Schichten basierend auf einem "Header"-Feld und einem Datenfeld, die jedem von N Bildblöcken in jeder ersten Schicht entsprechen.

8. Vorrichtung gemäß Anspruch 7, wobei die Verarbeitungseinheit, wenn die M ersten Schichten eine oberste erste Schicht, eine erste Zwischenschicht und eine unterste erste Schicht umfassen, des Weiteren konfiguriert ist zum:
Bestimmen eines transparenten Bereichs an der obersten ersten Schicht als einen ersten Zielbereich der obersten ersten Schicht;
Bestimmen eines transparenten Bereichs an der ersten Zwischenschicht und/oder eines Bereichs, der von einem opaken Bereich an der obersten ersten Schicht abgedeckt wird, als einen zweiten Zielbereich der ersten Zwischenschicht; und
Bestimmen eines transparenten Bereichs an der untersten ersten Schicht, des Bereichs, der durch den opaken Bereich an der obersten ersten Schicht abgedeckt wird, und/oder eines Bereichs, der durch einen opaken Bereich an der ersten Zwischenschicht abgedeckt ist, als einen dritten Zielbereich der untersten ersten Schicht.

9. Vorrichtung gemäß Anspruch 8, wobei die Leseeinheit des Weiteren konfiguriert ist zum:
Lesen von Pixeln an der obersten ersten Schicht, die von dem ersten Zielbereich verschieden ist, um eine oberste zweite Schicht zu erhalten;
Lesen von Pixeln an der ersten Zwischenschicht, die von dem zweiten Zielbereich verschieden ist, um eine zweite Zwischenschicht zu erhalten; und
Lesen von Pixeln an der untersten ersten Schicht, die von dem dritten Zielbereich verschieden ist, um eine unterste zweite Schicht zu erhalten; wobei
die M zweiten Schichten die oberste zweite Schicht, die zweite Zwischenschicht und die unterste zweite Schicht umfassen.

10. Vorrichtung gemäß einem der Ansprüche 7 bis 9, wobei
die Verarbeitungseinheit des Weiteren konfiguriert ist zum: Markieren einer Maske in dem Zielbereich von jeder der M ersten Schichten, nachdem der Zielbereich von jeder der M ersten Schichten bestimmt worden ist, wobei Pixel in einem Bereich, der durch die Maske angegeben ist, nicht gelesen werden dürfen; und
die Leseeinheit des Weiteren konfiguriert ist zum: Lesen von Pixeln in Bildbereichen, die nicht mit der Maske markiert sind, an den M ersten Schichten; und Überspringen des Lesens von Pixeln in Bildbereichen, die mit der Maske markiert sind, an den M ersten Schichten.

11. Vorrichtung gemäß einem der Ansprüche 7 bis 10, wobei die M ersten Schichten Bilder sind, die ein RGBA- oder ARGB-Datenformat verwenden, und wobei R, G und B separat eine Farbkomponente eines Pixels repräsentieren, und A eine Transparenzkomponente eines Pixels repräsentiert.

12. Vorrichtung gemäß einem der Ansprüche 7 bis 11, wobei
die Verarbeitungseinheit des Weiteren konfiguriert ist zum Bestimmen einer hierarchischen Beziehung der M zweiten Schichten basierend auf der hierarchischen Beziehung der M ersten Schichten; und
die Anzeigeeinheit des Weiteren konfiguriert ist zum Überlagern der M zweiten Schichten basierend auf der hierarchischen Beziehung der M zweiten Schichten, um ein Zielbild zu erhalten; und Anzeigen des Zielbildes auf einem Anzeigebildschirm der Vorrichtung.

13. Computerlesbares Speichermedium, wobei das computerlesbare Speichermedium ein Computerprogramm speichert, und die Endgerätvorrichtung, wenn das Computerprogramm auf einer Endgerätvorrichtung ausgeführt wird, in die Lage versetzt wird, das Verfahren gemäß einem der Ansprüche 1 bis 6 durchzuführen.

14. Computerprogrammprodukt, wobei das Computerprogrammprodukt ein Computerprogramm umfasst, und der Computer, wenn das Computerprogramm durch einen Computer ausgeführt wird, in die Lage versetzt wird, das Verfahren gemäß einem der Ansprüche 1 bis 6 zu implementieren.

## Revendications

1. Procédé de traitement d'une image multicouche, comprenant :
la détermination (S110) d'une zone cible de chacune de M premières couches sur la base d'informations de transparence de pixel et d'une relation hiérarchique entre les M premières couches, dans lequel la zone cible comprend une zone transparente et/ou une zone couverte ;
la lecture (S120) de pixels au niveau des M premières couches autres que la zone cible pour obtenir M secondes couches, dans lequel la quantité totale de pixels au niveau des M secondes couches est inférieure à la quantité totale de pixels au niveau des M premières couches ; et
l'affichage (S130) d'une image obtenue en superposant les M secondes couches, dans lequel
la zone couverte est une zone couverte par une zone opaque d'une couche supérieure, les informations de transparence de pixel correspondant à un pixel dans la zone opaque indiquent que le pixel est opaque, les informations de transparence de pixel correspondant à un pixel dans la zone transparente indiquent que le pixel est transparent, et M est un nombre entier supérieur à 1,
avant la détermination (S110) d'une zone cible de chacune des M premières couches, le procédé comprenant en outre :
le traçage (S140) des M premières couches à l'aide d'une unité de traitement graphique, GPU, dans lequel les M premières couches ont la relation hiérarchique ;
après le traçage (S140) des M premières couches en utilisant une GPU, le procédé comprenant en outre :
l'obtention (S150) des informations de transparence de pixel des M premières couches sur la base de données de pixel des M premières couches ; et
l'écriture (S160) des M premières couches et des informations de transparence de pixel dans une mémoire, dans lequel
la lecture (S120) de pixels au niveau des M premières couches autres que la zone cible comprend :
la lecture (S121) de pixels au niveau des M premières couches autres que la zone cible à partir de la mémoire ;
dans lequel l'obtention (S150) des informations de transparence de pixel des M premières couches comprend :
la division de chacune des M premières couches en N blocs d'images, dans lequel N est un nombre entier supérieur à 1 ; et
**caractérisé par** :
le fait de parcourir toutes les données de pixel dans chaque bloc d'image, pour obtenir des informations de transparence de pixel correspondant à chaque bloc d'image, dans lequel
l'écriture (S160) des M premières couches et des informations de transparence de pixel dans une mémoire comprend :
la compression de chaque bloc d'image au niveau des M premières couches et d'informations de transparence de pixel correspondantes, et l'écriture d'un bloc d'image compressé et d'informations compressées dans la mémoire,
dans lequel un champ correspondant à chaque bloc d'image des M premières couches comprend un champ d'en-tête et un champ de données, le champ d'en-tête correspondant à chaque bloc d'image comprend des informations de transparence de tous les pixels ou d'une partie des pixels de chaque bloc d'image, la partie des pixels est située dans la zone transparente et/ou la zone opaque, et le champ de données correspondant à chaque bloc d'image comprend les valeurs de pixel de tous les pixels dans chaque bloc d'image ; et
la compression de chaque bloc d'image au niveau des M premières couches et d'informations de transparence de pixel correspondantes, et l'écriture d'un bloc d'image compressé et d'informations compressées dans la mémoire comprend :
l'écriture, dans la mémoire, du champ d'en-tête et du champ de données qui correspondent à chaque bloc d'image des M premières couches, dans lequel
la détermination (S110) d'une zone cible de chacune des M premières couches sur la base d'informations de transparence de pixel et d'une relation hiérarchique des M premières couches comprend :
la détermination de la zone cible de chacune des M premières couches sur la base d'un champ d'en-tête et d'un champ de données correspondant à chacun des N blocs d'images de chaque première couche.

2. Procédé selon la revendication 1, dans lequel les M premières couches comprennent une première couche supérieure, une première couche intermédiaire, et une première couche inférieure, la détermination d'une zone cible de chacune des M premières couches sur la base d'informations de transparence de pixel et d'une relation hiérarchique des M premières couches comprend :
la détermination d'une zone transparente au niveau de la première couche supérieure en tant que première zone cible de la première couche supérieure ;
la détermination d'une zone transparente au niveau de la première couche intermédiaire et/ou d'une zone couverte par une zone opaque au niveau de la première couche supérieure en tant que deuxième zone cible de la première couche intermédiaire ; et
la détermination d'une zone transparente au niveau de la première couche inférieure, de la zone couverte par la zone opaque au niveau de la première couche supérieure, et/ou d'une zone couverte par une zone opaque au niveau de la première couche intermédiaire en tant que troisième zone cible de la première couche inférieure.

3. Procédé selon la revendication 2, dans lequel la lecture de pixels au niveau des M premières couches autres que la zone cible pour obtenir M secondes couches comprend :
la lecture de pixels au niveau de la première couche supérieure autre que la première zone cible, pour obtenir une seconde couche supérieure ;
la lecture de pixels au niveau de la première couche intermédiaire autre que la deuxième zone cible, pour obtenir une seconde couche intermédiaire ; et
la lecture de pixels au niveau de la première couche inférieure autre que la troisième zone cible, pour obtenir une seconde couche inférieure, dans lequel
les M secondes couches comprennent la seconde couche supérieure, la seconde couche intermédiaire, et la seconde couche inférieure.

4. Procédé selon l'une quelconque des revendications 1 à 3, après la détermination d'une zone cible de chacune des M premières couches, et avant la lecture de pixels au niveau des M premières couches autres que la zone cible, le procédé comprenant en outre :
le marquage d'un masque dans la zone cible de chacune des M premières couches, dans lequel des pixels dans une zone indiquée par le masque ne sont pas autorisés à être lus ; et
la lecture de pixels au niveau des M premières couches autres que la zone cible comprenant :
la lecture de pixels dans les zones d'image qui ne sont pas marquées avec le masque au niveau des M premières couches ; et
l'absence de lecture de pixels dans les zones d'image qui sont marquées avec le masque au niveau des M premières couches.

5. Procédé selon l'une quelconque des revendications 1 à 4, dans lequel les M premières couches sont des images utilisant un format de données RVBA ou ARVB, dans lequel R, V et B représentent séparément une composante de couleur d'un pixel, et A représente une composante de transparence d'un pixel.

6. Procédé selon l'une quelconque des revendications 1 à 5, dans lequel l'affichage d'une image obtenue en superposant les M secondes couches comprend :
la détermination d'une relation hiérarchique des M secondes couches sur la base de la relation hiérarchique des M premières couches ;
la superposition des M secondes couches sur la base de la relation hiérarchique des M secondes couches, pour obtenir une image cible ; et
l'affichage de l'image cible sur un écran d'affichage.

7. Appareil pour le traitement d'une image multicouche, comprenant une unité de traitement, une unité de lecture, et une unité d'affichage, dans lequel
l'unité de traitement est configurée pour déterminer une zone cible de chacune des M premières couches sur la base d'informations de transparence de pixel et d'une relation hiérarchique des M premières couches, dans lequel la zone cible comprend une zone transparente et/ou une zone couverte ;
l'unité de lecture est configurée pour lire des pixels au niveau des M premières couches autres que la zone cible afin d'obtenir M secondes couches, dans lequel la quantité totale de pixels au niveau des M secondes couches est inférieure à la quantité totale de pixels au niveau des M premières couches ; et
l'unité d'affichage est configurée pour afficher une image obtenue en superposant les M secondes couches, dans lequel
la zone couverte est une zone couverte par une zone opaque d'une couche supérieure, les informations de transparence de pixel correspondant à un pixel de la zone opaque indiquent que le pixel est opaque, les informations de transparence de pixel correspondant à un pixel de la zone transparente indiquent que le pixel est transparent, et M est un nombre entier supérieur à 1,
dans lequel l'unité de traitement est en outre configurée pour : avant que la zone cible de chacune des M premières couches soit déterminée, tracer les M premières couches à l'aide d'une unité de traitement graphique, GPU, dans lequel les M premières couches ont la relation hiérarchique ;
dans lequel l'unité de traitement est en outre configurée pour : après le traçage des M premières couches à l'aide d'une GPU, obtenir les informations de transparence de pixel des M premières couches sur la base des données de pixel des M premières couches ; et écrire les M premières couches et les informations de transparence de pixel dans une mémoire ; et
l'unité de lecture est en outre configurée pour : lire des pixels au niveau des M premières couches autres que la zone cible à partir de la mémoire ;
dans lequel l'unité de traitement est en outre configurée pour :
diviser chacune des M premières couches en N blocs d'images, dans lequel N est un nombre entier supérieur à 1 ;
**caractérisé en ce que** l'unité de traitement est en outre configurée pour :
parcourir toutes les données de pixel dans chaque bloc d'image, pour obtenir des informations de transparence de pixel correspondant à chaque bloc d'image ; et
compresser chaque bloc d'image au niveau des M premières couches et d'informations de transparence de pixel correspondantes, et écrire le bloc d'image compressé et les informations compressées dans la mémoire,
dans lequel un champ correspondant à chaque bloc d'image des M premières couches comprend un champ d'en-tête et un champ de données, le champ d'en-tête correspondant à chaque bloc d'image comprend des informations de transparence de tous les pixels ou d'une partie des pixels de chaque bloc d'image, la partie de pixels est située dans la zone transparente et/ou la zone opaque, et le champ de données correspondant à chaque bloc d'image comprend des valeurs de pixel de tous les pixels dans chaque bloc d'image ; et
l'unité de traitement en outre configurée pour : écrire, dans la mémoire, le champ d'en-tête et le champ de données qui correspondent à chaque bloc d'image des M premières couches ; et déterminer la zone cible de chacune des M premières couches sur la base d'un champ d'en-tête et d'un champ de données qui correspondent à chacun des N blocs d'images de chaque première couche.

8. Appareil selon la revendication 7, dans lequel lorsque les M premières couches comprennent une première couche supérieure, une première couche intermédiaire, et une première couche inférieure, l'unité de traitement en outre configurée pour :
déterminer une zone transparente au niveau de la première couche cible en tant que première zone cible de la première couche supérieure ;
déterminer une zone transparente au niveau de la première couche intermédiaire et/ou d'une zone couverte par une zone opaque au niveau de la première couche supérieure en tant que deuxième zone cible de la première couche intermédiaire ; et
déterminer une zone transparente au niveau de la première couche inférieure, la zone couverte par la zone opaque au niveau de la première couche supérieure, et/ou une zone couverte par une zone opaque au niveau de la première couche intermédiaire en tant que troisième zone cible de la première couche inférieure.

9. Appareil selon la revendication 8, dans lequel l'unité de lecture est en outre configurée pour :
lire les pixels au niveau de la première couche supérieure autre que la première zone cible, pour obtenir une seconde couche supérieure ;
lire les pixels au niveau de la première couche intermédiaire autre que la deuxième zone cible, pour obtenir une seconde couche intermédiaire ; et
lire les pixels au niveau de la première couche inférieure autre que la troisième zone cible, pour obtenir une seconde couche inférieure, dans lequel
les M secondes couches comprennent la seconde couche supérieure, la seconde couche intermédiaire, et la seconde couche inférieure.

10. Appareil selon l'une quelconque des revendications 7 à 9, dans lequel
l'unité de traitement en outre configurée pour : après que la zone cible de chacune des M premières couches a été déterminée, marquer un masque dans la zone cible de chacune des M premières couches, dans lequel des pixels dans une zone indiquée par le masque ne sont pas autorisés à être lus ; et
l'unité de lecture est en outre configurée pour : lire des pixels dans les zones d'image qui ne sont pas marquées avec le masque au niveau des M premières couches, et ne pas lire les pixels dans les zones d'image qui sont marquées avec le masque au niveau des M premières couches.

11. Appareil selon l'une quelconque des revendications 7 à 10, dans lequel les M premières couches sont des images utilisant un format de données RVBA ou ARVB, et dans lequel R, V et B représentent séparément une composante de couleur d'un pixel, et A représente une composante de transparence d'un pixel.

12. Appareil selon l'une quelconque des revendications 7 à 11, dans lequel
l'unité de traitement en outre configurée pour déterminer une relation hiérarchique des M secondes couches sur la base de la relation hiérarchique des M premières couches ; et
l'unité d'affichage est en outre configurée pour superposer les M secondes couches sur la base de la relation hiérarchique des M secondes couches afin d'obtenir une image cible ; et afficher l'image cible sur un écran d'affichage de l'appareil.

13. Support d'enregistrement lisible par ordinateur, le support d'enregistrement lisible par ordinateur stockant un programme informatique, et lorsque le programme informatique est exécuté sur un dispositif terminal, le dispositif terminal permettant de réaliser le procédé selon l'une quelconque des revendications 1 à 6.

14. Produit programme d'ordinateur, le produit programme d'ordinateur comprenant un programme informatique, et lorsque le programme informatique est exécuté par un ordinateur, l'ordinateur permettant de mettre en œuvre le procédé selon l'une quelconque des revendications 1 à 6.
